# EUROPEAN PATENT SPECIFICATION

(11) **EP 0 542 409 B1**
(45) Date of publication and mention of the grant of the patent: **29.12.1997**
(21) Application number: 92308048.5
(22) Date of filing: 04.09.1992
(51) Int. Cl.: D03D 51/12, G05B 13/02

(54) **Apparatus for controlling weft inserting in jet loom**
Apparat zur Steuerung des Eintrages des Schussfadens in einen schützenlosen Webstuhl
Appareil pour commander la trame inserée dans un métier à injection

(30) Priority: 12.11.1991 JP 322449/91
(43) Date of publication of application: 19.05.1993
(73) Proprietor: TSUDAKOMA KOGYO KABUSHIKI KAISHA, Kanazawa-shi Ishikawa-Ken (JP)
(72) Inventor: Yamada, Shigeo, Komatsu-shi, Ishikawa-ken (JP)
(74) Representative: Read, Matthew Charles

(56) References cited:
- EP-A- 0 403 175
- PATENT ABSTRACTS OF JAPAN, unexamined applications, C field, vol. 15, no. 293, July 25, 1991 THE PATENT OFFICE JAPANESE GOVERNMENT page 14 C 853
- PATENT ABSTRACTS OF JAPAN, unexamined applications, C field, vol. 14, no. 509, November 7, 1990 THE PATENT OFFICE JAPANESE GOVERNMENT page 29 C 776

## Description

The present invention relates to an apparatus for controlling weft insertion in a jet loom, comprising first input means for inputting an objectively determined weaving parameter value, inferential control means responsive to an input objectively determined weaving parameter value, and means for adjusting the pressure of fluid supplied to said weft insertion nozzle in dependence on said inferred pressure.

JP-A-63-21951, JP-A-53-21953 and EP-A-0503848 disclose apparatus for controlling weft insertion which calculate, in particular, a pressure value for fluid provided to a weft insertion nozzle and a weft insertion condition on the basis of textile parameters such as weft type, weft size, woven density, textile width and woven texture, and adjusts the pressure of the fluid on the basis of the calculated pressure value.

In this conventional apparatus for controlling weft insertion, the textile conditions to be used for calculation are values objectively determined according to the set-up textile conditions such as a weft type: span yarn-count #50, textile width: 150 cm, and woven density: 50 pcs/in.

Flyability and cuttability have been considered to be the same for the same type of weft. However, this is not the case. In other words, variations in weft size and the presence of fluff in the weft production process result in variations with respect to flyability and cuttability. It cannot be said that the variability in flyability and cuttability is strictly the same even for the same type of weft.

However, other factors are predictable, for example the performance of the devices for weft insertion such as the weft inserting nozzle, the reed and the length measuring storage device. As described above, the flyability and cuttability of weft not readily, objectively determinable values but are determinable subjectively to be, for example, "easy to fly", "hard to fly", "easy to cut" and "hard to cut".

timing values by using a prior art. However, the injection pressure of the weft insertion fluid is greatly influenced by the subjectively determinable values.

In the conventional apparatus for controlling weft insertion, however, subjectively determinable values are not taken into considerations and, therefore, no accurate weft insertion injection pressure could be calculated.

EP-A-0503848, which is comprised in the state of the art by virtue of Art. 54(3) EPC, discloses the possibility of using subjectively determined weaving parameter values but only in the cases of machine stoppages and produced fabric quality.

It is an aim of the present invention to be able to calculate accurate pressure suitable for any actual weft and any weft insertion device.

According to the present invention, there is provided a jet loom, comprising input means for inputting an objectively determined weaving parameter value and a subjectively determined weaving parameter value, means responsive to both an input objectively determined weaving parameter value and an input subjectively determined weaving parameter value to infer by fuzzy inference a correct pressure for fluid to be supplied to a weft insertion nozzle, and means for adjusting the pressure of fluid supplied to said weft insertion nozzle in dependence on said inferred correct pressure, wherein the input means is arranged for the input of one or more of the following parameters: weft characteristics, reed performance, nozzle performance, length measuring unit performance.

The objectively determined weaving parameter value determined by the textile specification can be selected from a group including weft type, weft size, woven density, textile width, woven texture, weft twist number or the like.

Also, the objectively determined weaving parameter value determined by the specification of the weaving machine can be selected from a group including weft inserting nozzle type, reed type, the rotational speed of the weaving machine, weft running time or the like.

Embodiments of the present invention will now be described with reference to the accompanying drawings, in which:
Fig. 1 is a schematic diagram showing a weaving machine provided with an apparatus for controlling weft inserting as a preferred embodiment of the present invention;
Fig. 2 is a diagram showing a fuzzy label as a preferred embodiment of the present invention;
Fig. 3 is a flow chart showing a fuzzy control circuit;
Fig. 4 is an explanatory view showing a fuzzy control inference;
Fig. 5 is an explanatory view continuing to Fig. 4 and showing a fuzzy inference;
Fig. 6 is an explanatory view continuing to Fig. 5 and showing a fuzzy inference;
Fig. 7 is an explanatory view continuing to Fig. 6 and showing a fuzzy inference;
Fig. 8 is an explanatory view continuing to Fig. 7 and showing a fuzzy inference;
Fig. 9 is an explanatory view continuing to Fig. 8 and showing a fuzzy inference;
Fig. 10 is an explanatory view showing another fuzzy inference; and
Fig. 11 is an explanatory view continuing to Fig. 10 and showing another fuzzy inference.

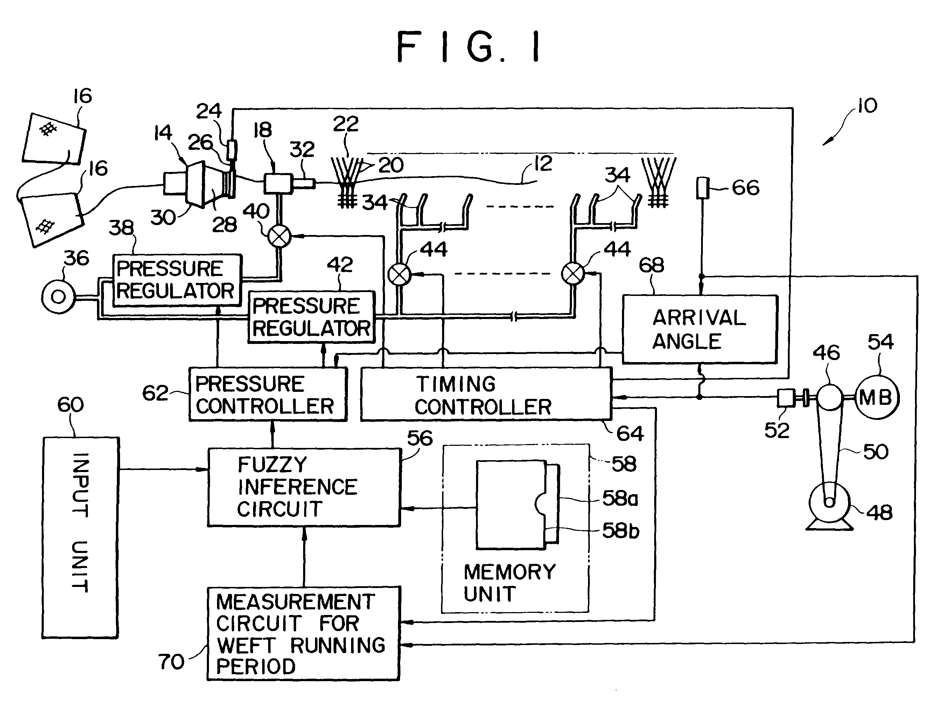

Referring now to Fig. 1, a weaving machine 10 is a jet loom of an air or water type and includes a length measuring storage device 14 of a drum type for weft 12.

The weft 12 is wound up in a plurality of weft packages 16. The weft 12 is supplied from the weft packages 16 to a weft insertion device 18, known per se, through the length measuring storage device 14 and is then inserted into a shedding 22 of a warp 20 by the weft insertion device 18. The weft wound around both weft packages 16 is tied together so as to act as one piece of weft. In other words, so that it can be continuously drawn out in sequence by the length measuring storage device 14 from the weft wound around one of the weft packages.

The weft 12 is engaged by the external surface of a length measuring and storage drum 28 by a pin 26, having the tip end operated by an electromagnetic solenoid 24, and a predetermined length is wound around the external surface of the length measuring and storage drum 28 by the rotation of a yarn guide 30. The weft 12 is released by the pin 26 during weft insertion, and after the weft has been shot from the main nozzle 32 of the weft insertion device 18, together with fluid, into the shedding 22 of the warp 20, the weft is cut off. The weft insertion device 18 includes a plurality of subnozzles 34 for ejecting the fluid for advancing the weft 12 in a predetermined direction during weft insertion.

Operating fluid from a pressure source 36 is supplied into the main nozzle 32 through a pressure regulator 38 and a switching valve 40. The operating fluid from the pressure source 36 is supplied into each of the subnozzles 34 through a pressure regulator 42 and a corresponding switching valve 44.

The weaving machine 10 also includes a motor 48 coupled to a main shaft 46 for driving the reed. The rotation of the motor 48 is transmitted to the main shaft 46 by a connection mechanism 50. An encoder 52 for generating a rotational angle signal, corresponding to theangle of rotation of the main shaft 46, and an electromagnetic brake 54 for the main shaft 46 are connected to the main shaft 46. The length measuring storage device 14 and the weft insertion device 18 are driven together with the heald and the reed in synchronism with the rotation of the main shaft 46.

An apparatus for controlling weft inserting for the weaving machine 10 includes a fuzzy inference circuit 56 for inferring a pressure value for the fluid supplied to the weft inserting nozzles 32 and 34 on the basis of a fuzzy inference using at least one objectively determined weaving parameter value determined by the textile specification and the weaving machine specification, at least one subjectively determined weaving parameter value determined by human senses, a plurality of membership functions and a plurality of fuzzy control rules.

The weaving parameter values objectively determined by the textile specification can be a specific value selected from a group which includes weft type, weft size, woven density, textile width, woven texture, weft twist number or the like. In the following explanation, each of the weft size, the textile width, the woven density and the weft twist number will be used as the weaving parameter values objectively determined by the textile specification.

The weaving parameter values objectively determined by the weaving machine specification can be a specific value selected from a group which includes weft insertion nozzle type, reed type, the rotational frequency of a weaving machine, the running time of weft or the like. In the following explanation, the rotational frequency of a weaving machine and the running time of weft will be used as the weaving parameter value objectively determined by the specification of the weaving machine thereafter.

The weaving paramter values determined by human senses can be parameter values relating to the flyability and cuttability selected from a group which includes the weft characteristics, the reed performance, the nozzle performance, the performance of the weft insertion device, the performance of the length measuring device or the like which are difficult to determine objectively. In the following explanation, the flyability of the weft, the nozzle performance (the flyability of the weft), the reed performance (the flyability of the weft), the cuttability of the weft and the degree of uneveness in weft size will be used as the weaving parameter values determined by human senses, that is subjectively.

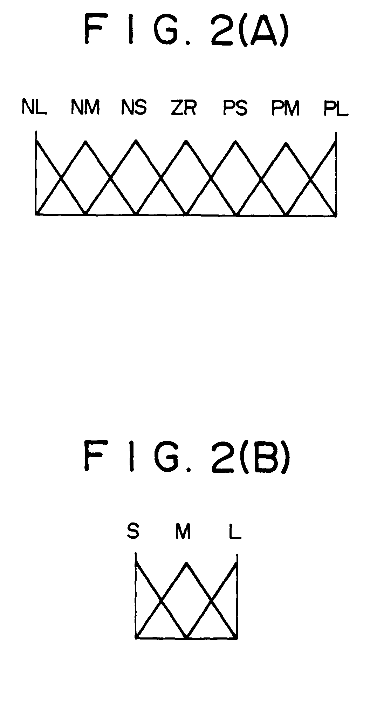

The apparatus for controlling weft inserting further includes a memory unit 58 for storing a plurality of membership functions (refer to Fig. 2) to be used for fuzzy inference in the fuzzy inference circuit 56 and a plurality of fuzzy control rules, an input unit 60 provided with a plurality of setting units for setting the objectively determined and subjectively determined weaving parameter values, a pressure controller 62 for controlling the pressure regulators 38 and 42 on the basis of the signal supplied from the fuzzy inference circuit 56, and a timing controller 64 for operating the switching valves 40 and 44 and the electromagnetic solenoid 24.

The fuzzy labels NL, NM, NS, ZR, PS, PM and PL shown in Fig. 2(A) are used together for determining the membership functions corresponding to the flyability of the weft, the weft size, the rotational frequency of a weaving machine and the textile width, respectively, among the weaving parameter values as described above.

The fuzzy labels NL, NM, NS, ZR, PS, PM and PL correspond to "very small", "small", "smallish", "standard", "largish", "large"and "very large", respectively, and represent the certainty that the corresponding weaving condition belongs to a set of parameter values.

Regarding the fuzzy labels NL, NM, NS, ZR, PS, PM and PL, the term "large" means "weft flies easily", "weft is thick", "the rotational speed of a weaving machine is high" or "textile width is large" depending on the preceding weaving conditions. The term "small" means "weft flies with difficulty", "weft is thin", "the rotational speed of a weaving machine is low" or "textile width is small" depending on the weaving parameter values.

On the basis of these fuzzy labels, each membership function corresponding to the preceding weaving parameter values is determined.

When a basic value of a weft inserting fluid pressure (basic pressure) is calculated, the membership function thus determined is used to determine how well the set weaving condition conforms to the antecedent part of each of the fuzzy control rules R1 through R49 which will be described later, that is, for the derivation of a degree of adaptation.

The fuzzy labels NL, NM, NS, ZR, PS, PM and PL are also used in order to determine the membership function of a basic pressure and correspond to the terms "increase greatly", "increase", "increase slighty", "hardly change", "decrease slightly", "decrease", and "decrease greatly", respectively. These fuzzy labels represent the certainty that a control object (basic pressure) to be increased or decreased belongs to a set of the terms and are used when deriving the consequent part of each of the fuzzy control rules R1 through R49 which will be described later on the basis of the degree of adaptation.

The fuzzy labels S, M and L shown in Fig. 2(B) are used in common for determining each membership function corresponding to the woven density, the nozzle performance, the reed performance, the weft running time, the cuttability of weft, the degree of unevenness in weft size and the weft twist number, among the weaving parameter values described above.

The fuzzy labels S, M and L correspond to the terms "small", "standard" and "large", respectively, and represent the certainty that the corresponding weaving conditions belong to a set of the terms.

In the fuzzy labels S, M and L, the term "large" means "woven density is large", "the nozzle performance is good", "the reed performance is good", and "the running time is long", and the term "small" means "woven density is small", "the nozzle performance is poor", "the reed performance is poor" and "the running time is short".

Each membership function corresponding to the preceding weaving parameter values is determined on the basis of these fuzzy labels.

The membership function thus determined is used to determine how well the weaving parameter values conform to the antecedent part of each of the fuzzy control rules r1 through r12 which will be described later, that is, for the derivation of the degree of adaptation, when a corrected value of the calculated base pressure is calculated.

The fuzzy labels S, M and L and also used for determining the membership functions for correcting the basic pressures, and correspond to the terms "decrease", "hardly change" and "increase", respectively. These fuzzy labels represent the certainty that a control object to be increased or decreased (basic pressure) belongs to a set of terms, and are used when deriving the consequent part of each of the fuzzy control rules r1 through r12 which will be described later on the basis of the preceding degree of adaptation.

Instead of using the fuzzy labels together, a different fuzzy label may be prepared for each weaving parameter. The fuzzy label for a pressrue may also be different from that for a weaving parameter. Additionally, the membership function for the pressure of the preceding control object is used both for the pressure of the main nozzle and the pressure of the subnozzle but a different membership function used for every pressure of the main nozzle and pressure of the subnozzle.

An IC memory can be used as the memory unit 58. It is preferable, however, to use both a writable and readable card type IC memory, that is, a memory 58a and a write and read mechanism 58b for writing and reading the information relative to the preceding memory card. By use of such a memory 58a and a write and read mechanism 58b, both the membership functions to be used for the fuzzy inference and the fuzzy control rules can be easily corrected or altered.

Each objectively determined weaving parameter value is set by an operator as a specific value in the setter of the input unit 60. However, each definite weaving condition may be input from the memory unit 58 to the fuzzy inference circuit 56.

Each subjectively determined weaving parameter value is set in the setter of the input unit 60 as an operator sensed value. Each subjectively determined weaving parameter value can be set as an arbitrary value selected from "0" to "10". For example, by defining a case where a weft flies poorly as "0", a case where it cannot be said that the weft easily or poorly as "5" or a case where the weft flies easily as "10". As for such a setter, a variable resistance, a digital switch or the like can be used.

The pressure controller 62 controls the pressure regulators 38 and 42 so that the pressure of the fluid ejected from the main nozzle 32 and the subnozzle 34 may be a value supplied from the fuzzy inference circuit 56. On the other hand, the timing controller 64 operates the switching valves 40 and 44 and the electromagnetic solenoid 24 so that the fluid injection start time, the fluid injection period and the operation start time of the electromagnetic solenoid 24 may be predetermined values.

The control apparatus for the weaving machine 10 further includes a detector 66 for detecting if the weft 12 is inserted up to a predetermined position. The detector 66 is provided at the opposite side of the main nozzle 32 with respect to the warp 20. As for the detector 66, a photo sensor using a photoelectric transducer can be employed.

The output signals from the detector 66 are supplied to a detection circuit 68 for detecting the weft arrival timing and a measurement circuit 70 for measuring the weft running period.

The detection circuit 68 detects the main shaft's angle when the leading edge of the weft 12 reaches the position of the detector 66, that is, an arrival main shaft angle, as a value representing the arrival timing for each weft insertion on the basis of the rotational angle signal from the encoder 52 and the output signal from the detector 66, and outputs the detected arrival timing to the controller 62. The arrival timing can be, for example, the rotational angle of the main shaft when the output signal of the detector 66 is supplied to the detecting circuit 68.

The measurement circuit 70 measures the time required for one weft insertion, that is, the weft running period by using the weft insertion start signal supplied from the timing controller 64 and the output signal of the detector 66, and supplies the measured running time to the fuzzy inference circuit 56. Furthermore, the angle required for weft inserting, that is, the running angle may be measured instead of measuring the running time.

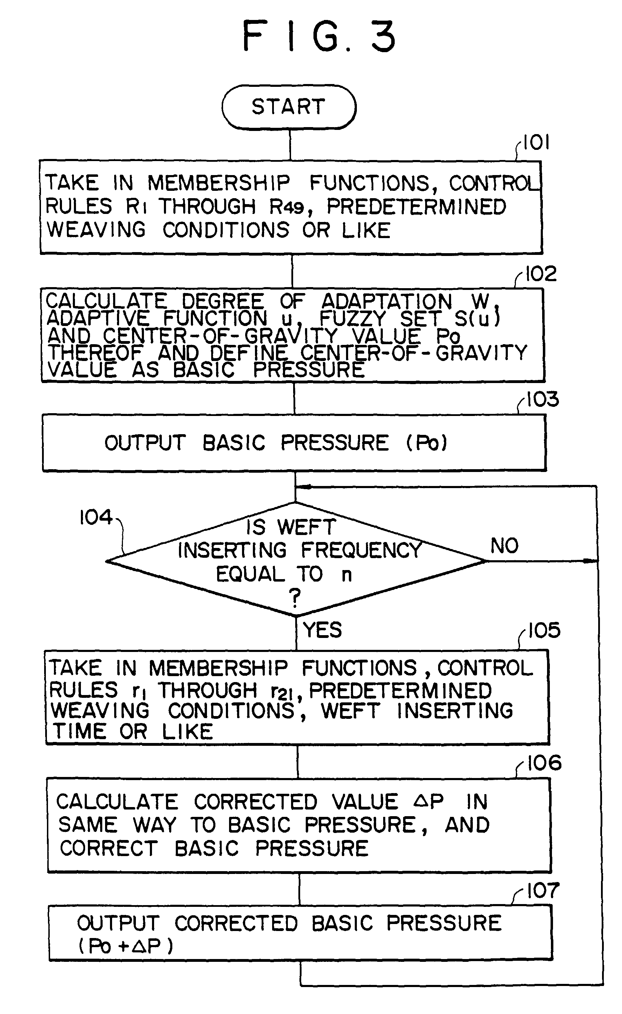

Referring now to Fig. 3, the detailed description of an embodiment for calculating the basic pressure for the weft insertion fluid will be given in the following. The following fuzzy control rules R1 through R49 and r1 through r21 are stored in the memory unit 58.
- R1:: Greatly decrease the basic pressure (NL), when the weft flies very easily (PL), the weft is very thin (NL), the rotational frequency of the weaving machine is very low (NL) and the textile width is very small (NL).
- R2:: Greatly decrease the basic pressure (NL), when the weft flies very easily (PL), the weft is very thin (NL), the rotational frequency of the weaving machine is very low (NL) and the textile width is small (NM).
- R3:: Greatly decrease the basic pressure (NL), when the weft flies very easily (PL), the weft is very thin (NL), the rotational frequency of the weaving machine is very low (NL) and the textile width is smallish (NS).
- R4:: Decrease the basic pressure (NM), when the weft flies very easily (PL), the weft is very thin (NL), the rotational frequency of the weaving machine is very low (NL) and the textile width is standard (ZR).
- R5:: Decrease the basic pressure (NM), when the weft flies very easily (PL), the weft is very thin (NL), the rotational frequency of the weaving machine is very low (NL) and the textile width is largish (PS).
- R6:: Decrease the basic pressure (NM), when the weft flies very easily (PL), the weft is very thin (NL), the rotational frequency of the weaving machine is very low (NL) and the textile width is large (PM).
- R7:: Decrease the basic pressure a little (NS), when the weft flies very easily (PL), the weft is very thin (NL), the rotational frequency of the weaving machine is very low (NL) and the textile width is very large (PL).
- R8:: Greatly decrease the basic pressure (NL), when the weft flies very easily (PL), the weft is very thin (NL), the rotational frequency of the weaving machine is low (NM) and the textile width is very small (NL).
- R9:: Greatly decrease the basic pressure (NL), when the weft flies very easily (PL), the weft is very thin (NL), the rotational frequency of the weaving machine is low (NM) and the textile width is small (NM).
- R10:: Decrease the basic pressure (NM), when the weft flies very easily (PL), the weft is very thin (NL), the rotational frequency of the weaving machine is low (NM) and the textile width is a smallish (NS).
- R11:: Decrease the basic pressure (NM), when the weft flies very easily (PL), the weft is very thin (NL), the rotational frequency of the weaving machine is low (NM) and the textile width is standard (ZR).
- R12:: Decrease the basic pressure (NM), when the weft flies very easily (PL), the weft is very thin (NL), the rotational frequency of the weaving machine is low (NM) and the textile width is largish (PS).
- R13:: Decrease slightly the basic pressure (NS), when the weft flies very easily (PL), the weft is very thin (NL), the rotational frequency of the weaving machine is low (NM) and the textile width is large (PM).
- R14:: Decrease slightly the basic pressure (NS), when the weft flies very easily (PL), the weft is very thin (NL), the rotational frequency of the weaving machine is low (NM) and the textile width is very large (PL).
- R15:: Greatly decrease the basic pressure (NL), when the weft flies very easily (PL), the weft is very thin (NL), the rotational frequency of the weaving machine is slightly low (NS) and the textile width is very small (NL).
- R16:: Decrease the basic pressure (NM), when the weft flies very easily (PL), the weft is very thin (NL), the rotational frequency of the weaving machine is slightly low (NS) and the textile width is small (NM).
- R17:: Decrease the basic pressure (NM), when the weft flies very easily (PL), the weft is very thin (NL), the rotational frequency of the weaving machine is slightly low (NS) and the textile width is smallish (NS).
- R18:: Decrease the basic pressure (NM), when the weft flies very easily (PL), the weft is very thin (NL), the rotational frequency of the weaving machine is slightly low (NS) and the textile width is standard (ZR).
- R19:: Decrease slightly the basic pressure (NS), when the weft flies very easily (PL), the weft is very thin (NL), the rotational frequency of the weaving machine is slightly low (NS) and the textile width is largish (PS).
- R20:: Decrease slightly the basic pressure (NS), when the weft flies very easily (PL), the weft is very thin (NL), the rotational frequency of the weaving machine is slightly low (NS) and the textile width is large (PM).
- R21:: Decrease slightly the basic pressure (NS), when the weft flies very easily (PL), the weft is very thin (NL), the rotational frequency of a weaving machine is slightly low (NS) and the textile width is very large (PL).
- R22:: Decrease the basic pressure (NM), when the weft flies very easily (PL), the weft is very thin (NL), the rotational frequency of the weaving machine is standard (ZR) and the textile width is very small (NL).
- R23:: Decrease the basic pressure (NM), when the weft flies very easily (PL), the weft is very thin (NL), the rotational frequency of the weaving machine is standard (ZR) and the textile width is small (NM).
- R24:: Decrease the basic pressure (NM), when the weft flies very easily (PL), the weft is very thin (NL), the rotational frequency of the weaving machine is standard (ZR) and the textile width is smallish (NS).
- R25:: Decrease slightly the basic pressure (NS), when the weft flies very easily (PL), the weft is very thin (NL), the rotational frequency of the weaving machine is standard (ZR) and the textile width is standard (ZR).
- R26:: Decrease slightly the basic pressure (NS), when the weft flies very easily (PL), the weft is very thin (NL), the rotational frequency of the weaving machine is standard (ZR) and the textile width is largish (PS).
- R27:: Decrease slightly the basic pressure (NS), when the weft flies very easily (PL), the weft is very thin (NL), the rotational frequency of the weaving machine is standard (ZR) and the textile width is large (PM).
- R28:: Standardize the basic pressure (ZR), when the weft flies very easily (PL), the weft is very thin (NL), the rotational frequency of the weaving machine is standard (ZR) and the textile width is very large (PL).
- R29:: Decrease the basic pressure (NM), when the weft flies very easily (PL), the weft is very thin (NL), the rotational frequency of the weaving machine is slightly high (PS) and the textile width is very small (NL).
- R30:: Decrease the basic pressure (NM), when the weft flies very easily (PL), the weft is very thin (NL), the rotational frequency of the weaving machine is slightly high (PS) and the textile width is small (NM).
- R31:: Decrease slightly the basic pressure (NS), when the weft flies very easily (PL), the weft is very thin (NL), the rotational frequency of the weaving machine is slightly high (PS) and the textile width is smallish (NS).
- R32:: Decrease slightly the basic pressure (NS), when the weft flies very easily (PL), the weft is very thin (NL), the rotational frequency of the weaving machine is slightly high (PS) and the textile width is standard (ZR).
- R33:: Decrease slightly the basic pressure (NS), when the weft flies very easily (PL), the weft is very thin (NL), the rotational frequency of the weaving machine is slightly high (PS) and the textile width is largish (PS).
- R34:: Standardize the basic pressure (ZR), when the weft flies very easily (PL), the weft is very thin (NL), the rotational frequency of the weaving machine is slightly high (PS) and the textile width is large (PM).
- R35:: Standardize the basic pressure (ZR), when the weft flies very easily (PL), the weft is very thin (NL), the rotational frequency of the weaving machine is slightly high (PS) and the textile width is very large (PL).
- R36:: Decrease the basic pressure (NM), when the weft flies very easily (PL), the weft is very thin (NL), the rotational frequency of the weaving machine is high (PM) and the textile width is very small (NL).
- R37:: Decrease slightly the basic pressure (NS), when the weft flies very easily (PL), the weft is very thin (NL), the rotational frequency of the weaving machine is high (PM) and the textile width is small (NM).
- R38:: Decrease slightly the basic pressure (NS), when the weft flies very easily (PL), the weft is very thin (NL), the rotational frequency of the weaving machine is high (PM) and the textile width is smallish (NS).
- R39:: Decrease slightly the basic pressure (NS), when the weft flies very easily (PL), the weft is very thin (NL), the rotational frequency of the weaving machine is high (PM) and the textile width is standard (ZR).
- R40:: Standardize the basic pressure (ZR), when the weft flies very easily (PL), the weft is very thin (NL), the rotational frequency of the weaving machine is high (PM) and the textile width is largish (PS).
- R41:: Standarize the basic pressure (ZR), when the weft flies very easily (PL), the weft is very thin (NL), the rotational frequency of the weaving machine is high (PM) and the textile width is large (PM).
- R42:: Standardize the basic pressure (ZR), when the weft flies very easily (PL), the weft is very thin (NL), the rotational frequency of the weaving machine is high (PM) and the textile width is very large (PL).
- R43:: Decrease slightly the basic pressure (NS), when the weft flies very easily (PL), the weft is very thin (NL), the rotational frequency of the weaving machine is very high (PL) and the textile width is very small (NL).
- R44:: Standardize the basic pressure (ZR), when the weft flies very easily (PL), the weft is very thin (NL), the rotational frequency of the weaving machine is very high (PL) and the textile width is small (NM).
- R45:: Standardize the basic pressure (ZR), when the weft flies very easily (PL), the weft is very thin (NL), the rotational frequency of the weaving machine is very high (PL) and the textile width is smallish (NS).
- R46:: Standardize the basic pressure (ZR), when the weft flies very easily (PL), the weft is very thin (NL), the rotational frequency of the weaving machine is very high (PL) and the textile width is standard (ZR).
- R47:: Increase slightly the basic pressure (PS), when the weft flies very easily (PL), the weft is very thin (NL), the rotational frequency of the weaving machine is very high (PL) and the textile width is largish (PS).
- R48:: Increase slightly the basic pressure (PS), when the weft flies very easily (PL), the weft is very thin (NL), the rotational frequency of the weaving machine is very high (PL) and the textile width is large (PM).
- R49:: Increase slightly the basic pressure (PS), when the weft flies very easily (PL), the weft is very thin (NL), the rotational frequency of the weaving machine is very high (PL) and the textile width is very large (PL).
- r1:: Increase slightly the basic pressure (L), when the woven density is large (L).
- r2:: Do not change the basic pressure (M), when the woven density is medium (M).
- r3:: Do not change the basic pressure (M), when the woven density is small (S).
- r4:: Decrease slightly the basic pressure (S), when the nozzle for easy flyability of weft is provided (L).
- r5:: Do not change the basic pressure (M), when the nozzle for normal flyability of weft is provided
- r6:: Increase slightly the basic pressure (L), when the nozzle for hard flyability of weft is provided (S).
- r7:: Decrease slightly the basic pressure (S), when the reed for easy flyability of weft is provided.
- r8:: Do not change the basic pressure (M), when the reed for normal flyability of weft is provided.
- r9:: Increase slightly the basic pressure (L), when the reed for hard flyability of weft is provided.
- r10:: Decrease slightly the basic pressure (S), when the weft running time is large (L).
- r11:: Do not change the basic pressure (M), when the weft running time is normal (M).
- r12:: Increase slightly the basic pressure (L), when the weft running time is small (S).
- r13:: Decrease slightly the basic pressure (S), when the weft is easily cuttable (L).
- r14:: Do not change the basic pressure (M), when the cuttability of weft is medium (M).
- r15:: Do not change the basic pressure (M), when the weft is hard to cut (S).
- r16:: Increase slightly the basic pressure (L), when the weft unevenness in size is large (L).
- r17:: Do not change the basic pressure (M), when the weft unevenness in size is medium (M).
- r18:: Do not change the basic pressure (M), when the weft unevenness in size is small (S).
- r19:: Increase slightly the basic pressure (L), when the weft twist number is large (L).
- r20:: Do not change the basic pressure (M), when the weft twist number is medium (M).
- r21:: Decrease slightly the basic pressure (S), when the weft twist number is small (S).

At first, the fuzzy inference circuit 56 takes in predetermined weaving parameter values (i.e. the flyability of the weft, the weft size, the rotational frequency of the weaving machine and the textile width), set in the setter of the input unit 60, the membership function of each weaving parameter corresponding to the fuzzy labels as shown in Fig 2(A) and stored in the memory unit 58, the fuzzy control rules R1 through R49 stored in the memory unit 58 or the like (Step 101 in Fig. 3).

Then, the fuzzy inference circuit 56 calculates a basic pressure P0 for the fluid for weft insertion on the basis of each weaving parameter, the membership functions for each weaving parameter and for the basic pressure, and the fuzzy control rules R1 through R49 (Step 102 in Fig. 3).

In the fuzzy inference circuit 56, the basic pressure P0 at Step 102 can be obtained by:
A1) Calculating the degree of matching, namely, the degree of adaptations wl through w49, of the weaving condition (i.e. the flyability of the weft, the weft size, the rotational frequency of the weaving machine, and the textile width) for the antecedent parts in the fuzzy control rules R1 through R49 for each fuzzy control rule from R1 to R49 on the basis of each weaving parameter and the membership function corresponding to each weaving parameter;
A2) Calculating, then, adaptive functions ul through u49 for indicating the degree of adaptations of the consequent parts in the fuzzy control rules R1 through R49 for each fuzzy control rule on the basis of the degree of adaptations wl through w49 thus obtained and the membership function for the basic pressure;
A3) Calculating, then, a composite membership function, i.e. a fuzzy set S(u), from the adaptive functions ul through u49 thus obtained; and
A4) Calculating, then, a centre-of-gravity value in the fuzzy set S(u) and defining the centre-of-gravity value as a definite value resulting from the overall inference by the fuzzy control rules R1 through R49, that is, as the basic pressure P0.

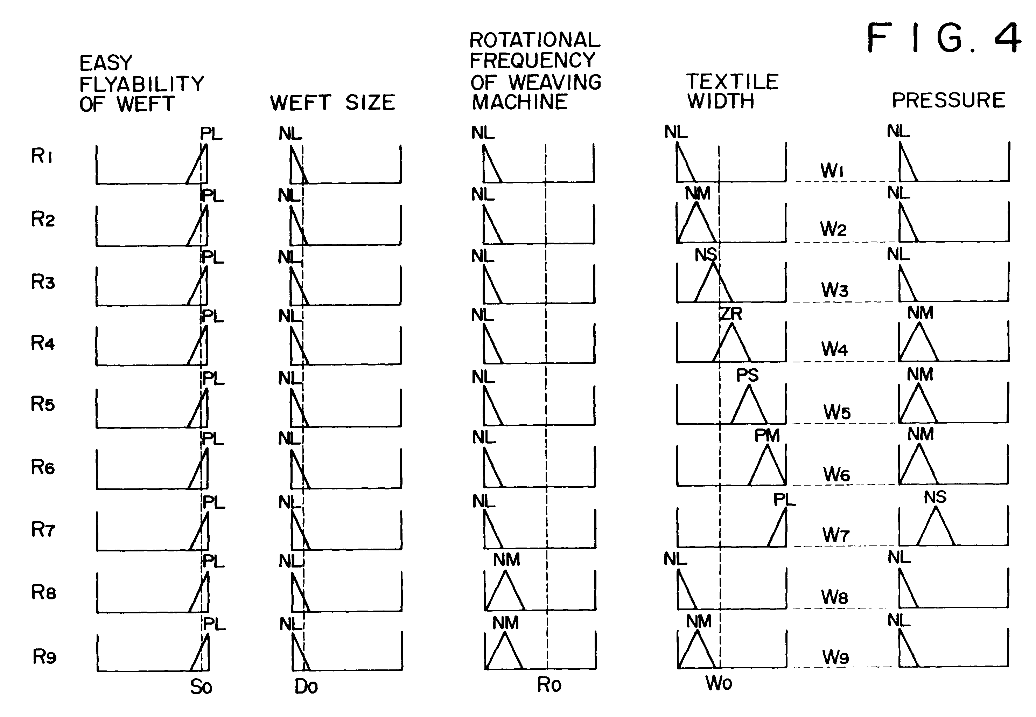

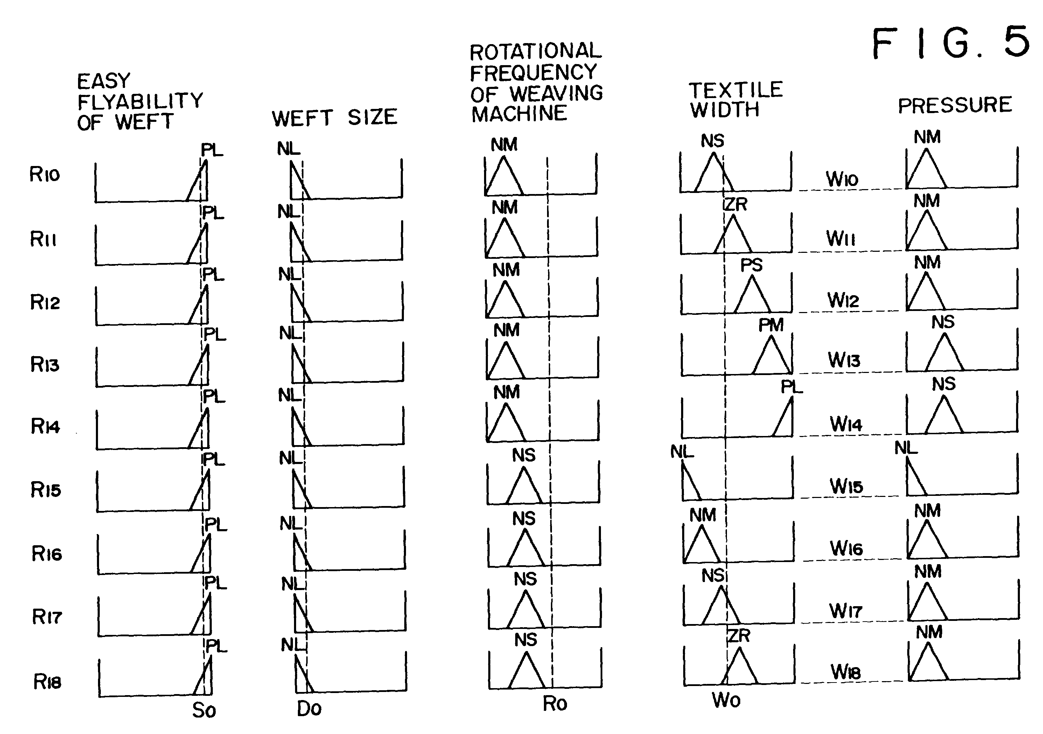

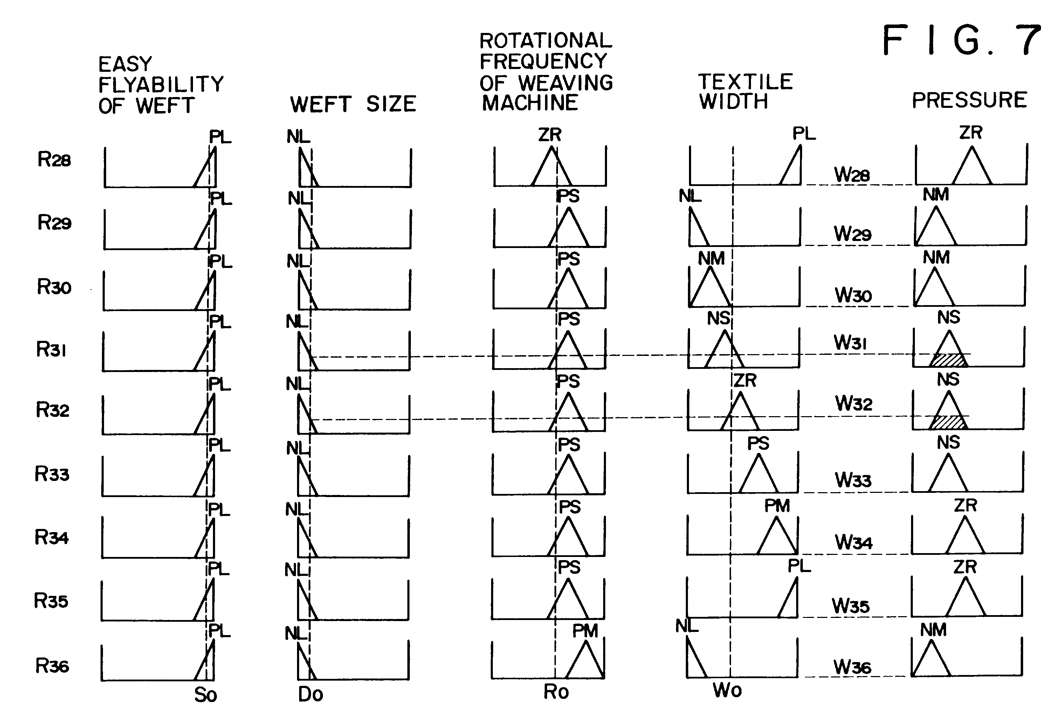

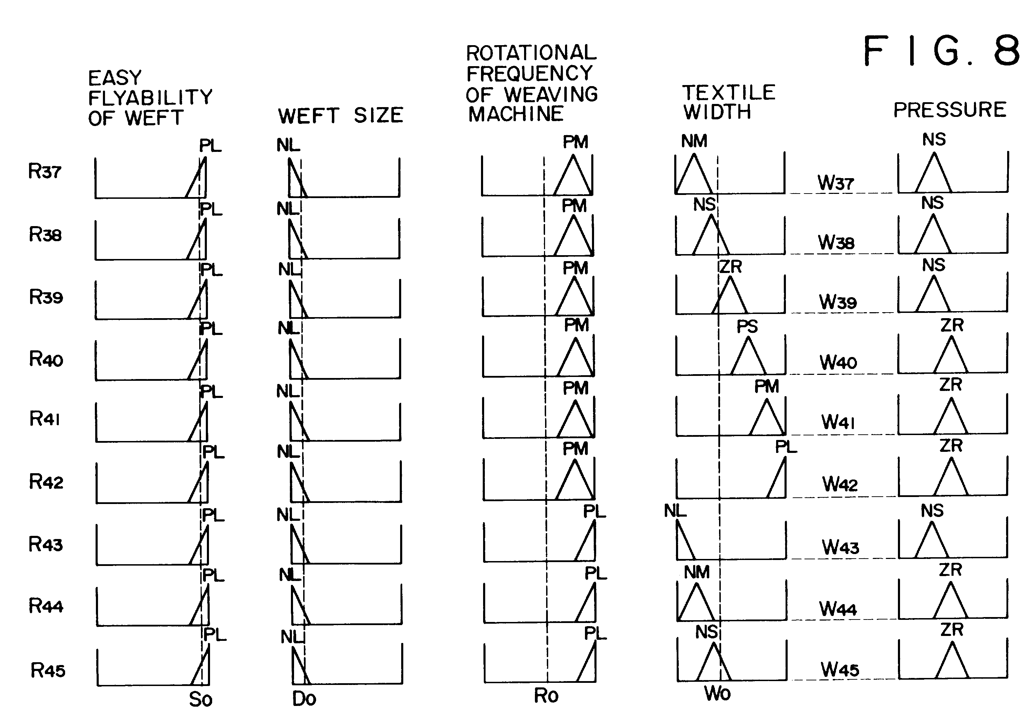

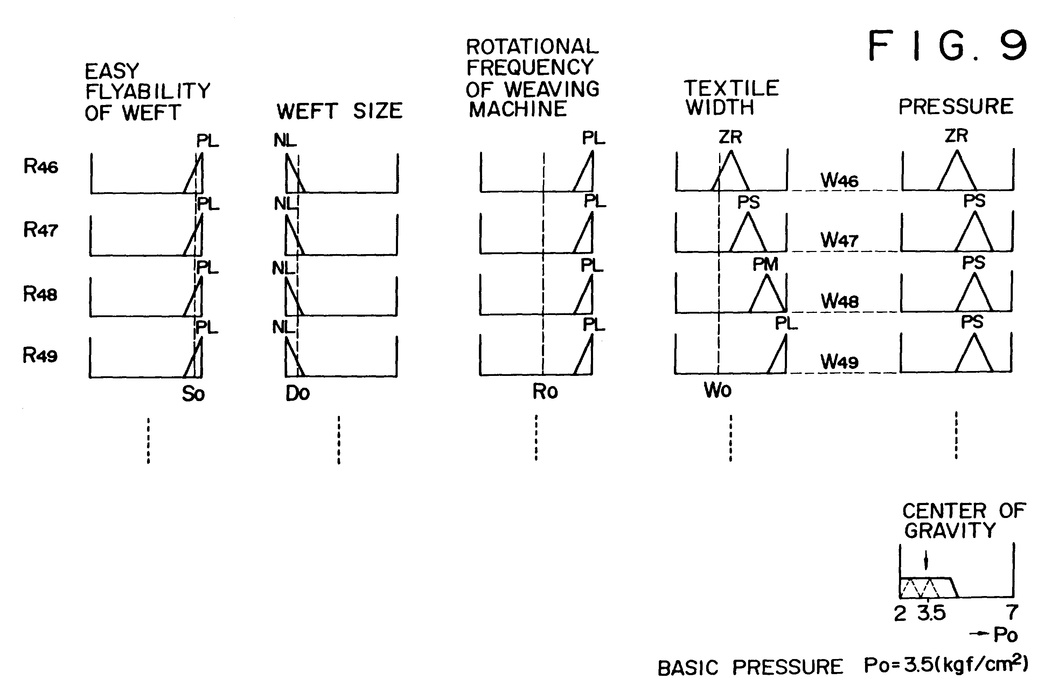

Each degree of adaptation wl through w49 and each adaptive function ul through u49 can be obtained in such a way as indicated in Figs. 4 through 9.

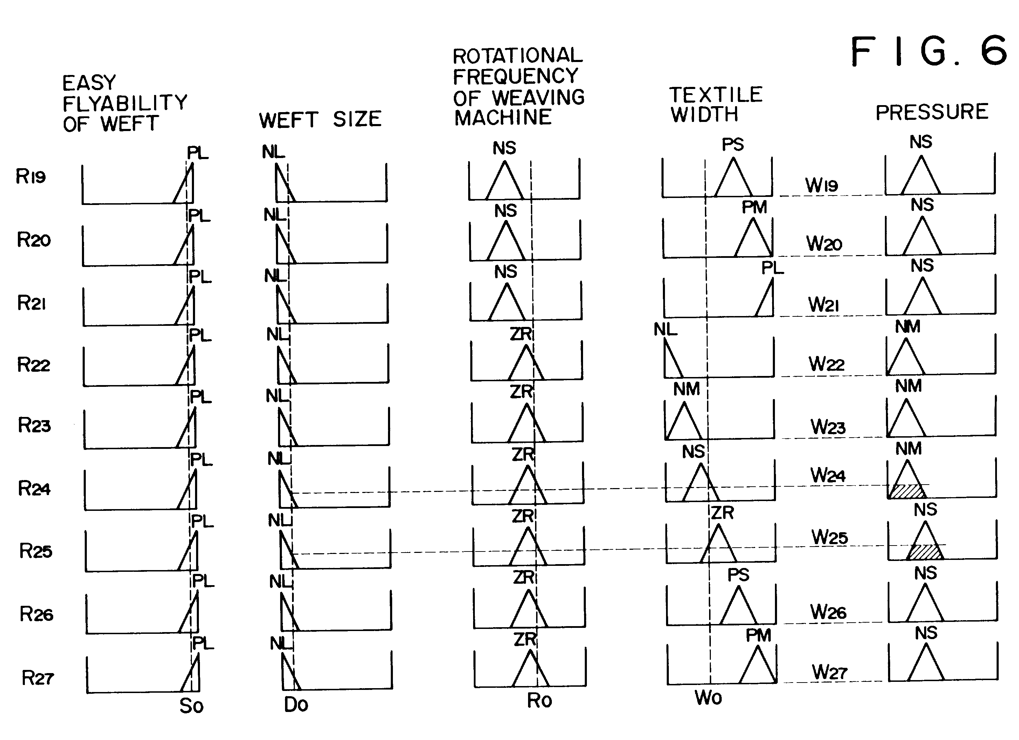

As indicated at R24 in Fig. 6, with reference to the fuzzy control rule R24, e.g. each degree of adaptation should be calculated for the value of each weaving parameter (i.e. the flyability of the weft S0, the weft size D0, the rotational frequency R0 of the weaving machine, and the textile width W0) and for the membership functions PL, NL, ZR and NS which are set in the antecedent parts corresponding to each weaving parameter. Then, a common portion in the degree of adaptations, i.e. the smallest degree of adaptation, is defined as the degree of adaptation w24 corresponding to the antecedent part in this fuzzy control rule R24.

Subsequently, a membership function NM for the basic pressure in the consequent part of the fuzzy control rule R24 should be cut off (headless) by the degree of adaptation w24 to obtain the minimum value (i.e. a common portion indicated by the shaded portion in Fig. 6) in the degree of adaptation w24 and the membership function NM. In the fuzzy control rule R24, the adaptive function u24 can be derived in this manner.

In similar to the above description, the adaptive functions ul through u23 and u25 through u49 for the fuzzy control rules Ri through R23, and R25 through R49 can be derived, respectively. Incidentally, when the degree of adaptation w is zero, then the corresponding adaptive function u become zero.

The centre-of-gravity value in the fuzzy set S(u) is the value on the abscissa dividing an area of the composite membership function in half.

When the calculation of the basic pressure P0 is over, the fuzzy inference circuit 56 outputs the basic pressure P0 to the controller 62 (Step 103 in Fig. 3) and waits until the weft inserting frequency becomes equal to a predetermined frequency n (Step 104 in Fig. 3).

Accordingly, the pressure in the fluid provided from the pressure regulators 38 and 42 to the nozzles 32 and 34 is controlled by the pressure controller 62 so as to become the value provided from the fuzzy inference circuit 56 to the pressure controller 62.

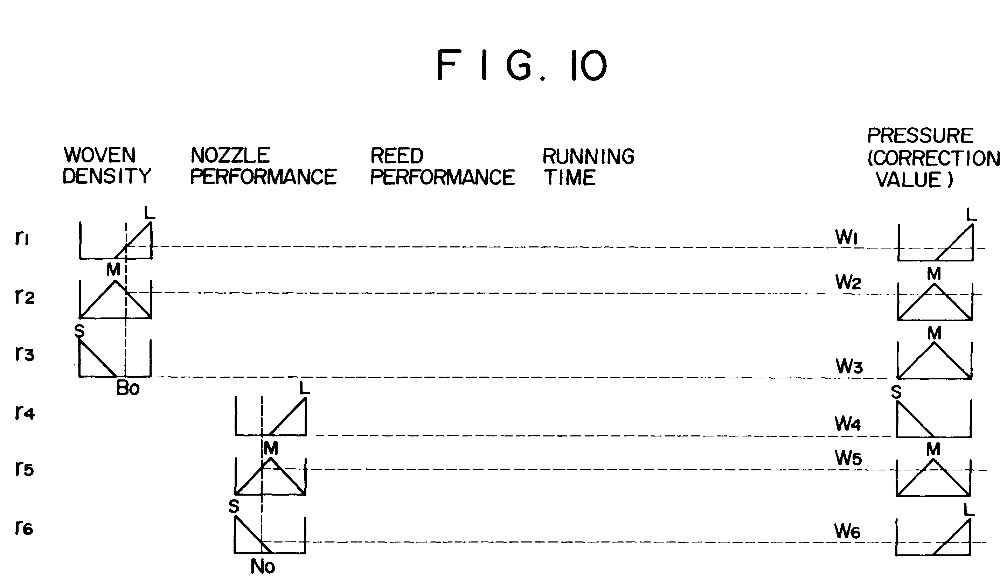

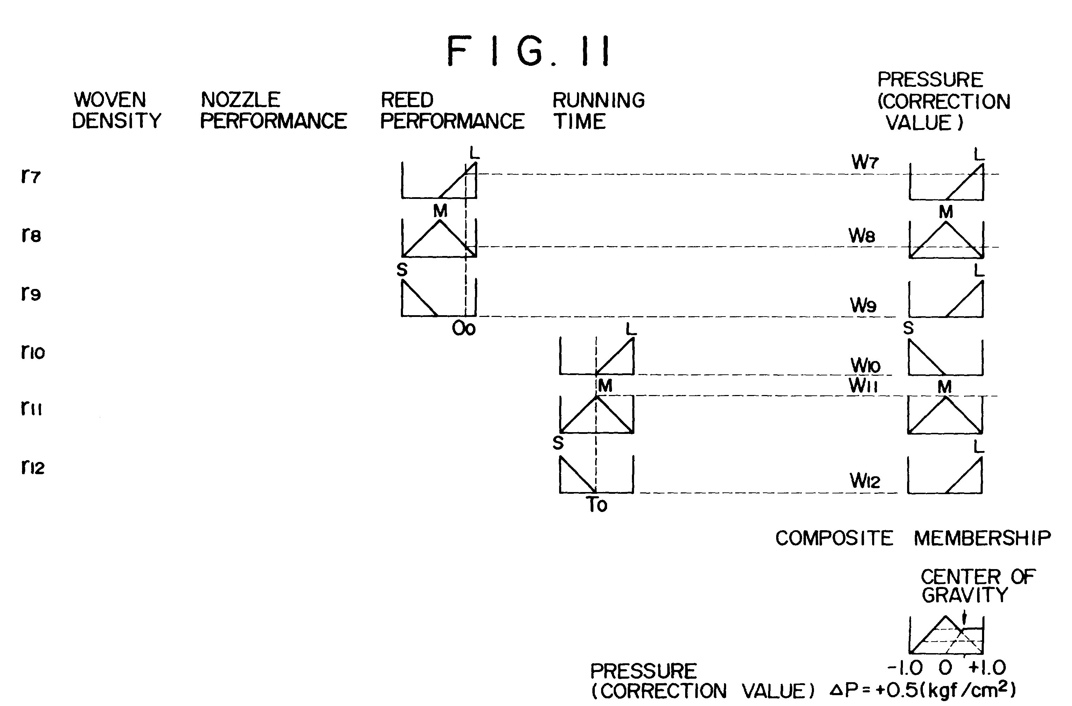

When the weft inserting frequency becomes n, the fuzzy inference circuit 56 takes therein a predetermined weaving condition (e.g., the woven density B0, the nozzle performance N0, the reed performance 00, the weft properties or the like), set in the setter of the input unit 60, the weft running time T0 by the weft running time measurement circuit 70, the membership function corresponding to each weaving condition stored in the memory unit 58 and the fuzzy control rules r1 through r21 stored in the memory unit 58 (Step 105 in Fig. 3), and then calculates a corrected value ΔP of the basic pressure in similar to a way of calculating the basic pressure at Step 102 to adjust the basic pressure by use of the resultant corrected value ΔP (Step 106 in Fig. 3). The corrected value ΔP can be calculated in the manner as shown in Figs. 10 and 11.

In Figs. 10 and 11, the woven density, the nozzle performance, the reed performance and the running time are adopted in the weaving parameters.

Subsequently, the fuzzy inference circuit 56 outputs an addition result of the corrected value ΔP and the basic pressure P0 to the controller 62 (Step 107 in Fig. 3). By this process, the pressure of the fluid provided from the pressure regulators 38 and 42 to the nozzles 32 and 34 is controlled by the pressure controller 62 so as to become a new value provided from the fuzzy inference circuit 56 to the pressure controller 62.

The above step 104 can be omitted if necessary. In other words, the above described preferred embodiment is set so as to calculate the basic pressure P0 and thereafter the corrected value ΔP every a predetermined weft inserting frequency n (Step 104). However, this step 104 can be omitted and the basic pressure P0 may be calculated simultaneously with the corrected value ΔP. The pressure for weft insertion may need merely to be automatically controlled by a control method known per se, e.g. a control method for changing the pressure of weft inserting so as to produce constant arrival timing.

Instead of calculating the basic pressure and the corrected value separately, only the basic pressure may be calculated by using one or more objectively determined weaving parameter values and one or more subjectively determined weaving parameter values. Otherwise, the corrected value for the basic pressure preliminarily set in the input unit or in the pressure controller may be calculated by using one or more objectively determined weaving parameter values and one or more subjectively determined weaving conditions.

In the preferred embodiments as described above, the fuzzy control rules R1 through R49 and r1 through r29 are merely examples, and can be supplemented, modified and deleted if necessary.

## Claims

1. A jet loom, comprising input means (60) for inputting an objectively determined weaving parameter value and a subjectively determined weaving parameter value, means (56,58) responsive to both an input objectively determined weaving parameter value and an input subjectively determined weaving parameter value to infer by fuzzy inference a correct pressure for fluid to be supplied to a weft insertion nozzle (32), and means (62,38) for adjusting the pressure of fluid supplied to said weft insertion nozzle (32) in dependence on said inferred correct pressure, wherein the input means (60) is arranged for the input of one or more of the following parameters: weft characteristics, reed performance, nozzle performance, length measuring unit performance.

2. A jet loom according to claim 1, wherein the input means (60) is arranged for the input of objectively determined values for a plurality of weaving parameters.

3. A jet loom according to claim 1 or 2, wherein the input means (60) is arranged for the input of one or more the following parameters: weft type, weft size, weave density, textile width, textile texture, weft twist number, weft insertion nozzle type, reed type, loom speed, weft running time.

4. A jet loom according to claim 1, 2 or 3, wherein the input means (60) is arranged for the input of subjectively determined values for a plurality of weaving parameters.

## Patentansprüche

1. Strahldüsenwebstuhl, der ein Eingabemittel (60) umfasst, um einen objektiv bestimmten Webereiparameterwert und einen subjektiv bestimmten Webereiparameterwert einzugeben, ein Mittel (56,58), das auf eine Eingabe eines objektiv bestimmten Webereiparameterwerts und auf eine Eingabe eines subjektiv bestimmten Webereiparameterwerts reagiert, um durch unscharfe Inferenz einen richtigen Druck für die Flüssigkeit abzuleiten, die einer Schusseintragungsdüse (32) geliefert werden soll, und ein Mittel (62,38), um den Druck der Flüssigkeit einzustellen, die der Schusseintragungsdüse (32) in Abhängigkeit von dem abgeleiteten richtigen Druck geliefert wird, in dem das Eingabemittel (60) für die Eingabe von einem oder mehreren der folgenden Parameter angeordnet ist: Schusskennzeichen, Webeblattleistung, Düsenleistung, Längenmessungseinheitsleistung.

2. Strahldüsenwebstuhl nach Anspruch 1, in dem das Eingabemittel (60) für die Eingabe von objektiv bestimmten Werten für eine Vielzahl von Webereiparametern angeordnet ist.

3. Strahldüsenwebstuhl nach Anspruch 1 oder 2, in dem das Eingabemittel (60) für die Eingabe von einem oder mehreren der folgenden Parameter angeordnet ist: Schussart, Schussgrösse, Webereidichte, Webstoffbreite, Webstoffbeschaffenheit, Schussdrehungsanzahl, Schusseintragungsdüsenart, Webeblattart, Webstuhlgeschwindigkeit, Schusslaufzeit.

4. Strahldüsenwebstuhl nach Anspruch 1, 2 oder 3, in dem das Eingabemittel (60) für die Eingabe von subjektiv bestimmten Werten für eine Vielzahl von Webereiparamtern angeordnet ist.

## Revendications

1. Métier à injection, comportant des moyens d'entrée (60) destinés à l'entrée d'une valeur d'un paramètre de tissage déterminée objectivement et d'une valeur d'un paramètre de tissage déterminée subjectivement, des moyens (56, 58) qui, en réponse à la fois à une entrée d'une valeur d'un paramètre de tissage déterminée objectivement et à une entrée d'une valeur d'un paramètre de tissage déterminée subjectivement, infèrent par inférence floue une pression correcte pour un fluide devant être fourni à une buse (32) d'insertion de trame, et des moyens (62, 38) destinés à régler la pression du fluide fourni à ladite buse (32) d'insertion de trame en fonction de ladite pression correcte inférée, dans lequel les moyens d'entrée (60) sont agencés pour l'entrée d'un ou plusieurs des paramètres suivants : caractéristiques de la trame, performance du peigne, performance de la buse, performance de l'unité de mesure de longueur.

2. Métier à injection selon la revendication 1, dans lequel les moyens d'entrée (60) sont agencés pour l'entrée de valeurs déterminées objectivement pour une pluralité de paramètres de tissage.

3. Métier à injection selon la revendication 1 ou 2, dans lequel les moyens d'entrée (60) sont agencés pour l'entrée d'un ou plusieurs des paramètres suivants : type de trame, dimension de la trame, densité de tissage, largeur du textile, texture du textile, nombre de torsions de la trame, type de la buse d'insertion de trame, type du peigne, vitesse du métier, temps de déplacement de la trame.

4. Métier à injection selon la revendication 1, 2 ou 3, dans lequel les moyens d'entrée (60) sont agencés pour l'entrée de valeurs déterminées subjectivement pour une pluralité de paramètres de tissage.
